# EUROPEAN PATENT SPECIFICATION

(11) **EP 2 990 697 B1**
(45) Date of publication and mention of the grant of the patent: **31.05.2017**
(21) Application number: 15175169.0
(22) Date of filing: 03.07.2015
(51) Int. Cl.: F16H 61/662, F16H 63/06

(54) **VEHICLE V-BELT CONTINUOUSLY VARIABLE TRANSMISSION**
STUFENLOS EINSTELLBARES FAHRZEUG-KEILRIEMENGETRIEBE
TRANSMISSION VARIABLE EN CONTINU À COURROIE EN V

(30) Priority: 18.08.2014 JP 2014165781
(43) Date of publication of application: 02.03.2016
(73) Proprietor: HONDA MOTOR CO., LTD., Tokyo 107-8556 (JP)
(72) Inventor: NEDACHI, Yoshiaki, Saitama, Saitama 351-0193 (JP); RYUZAKI, Tatsuya, Saitama, Saitama 351-0193 (JP)
(74) Representative: Quinterno, Giuseppe

(56) References cited:
- EP-A2- 1 972 836
- JP-A- 2012 047 292

## Description

The present invention relates to a vehicle V-belt continuously variable transmission including: a driving pulley that has a fixed sheave fixed to a drive shaft transmitted with power from an engine mounted on a vehicle and a movable sheave supported on the drive shaft in order to be axially relatively moved and not to be relatively rotated and arranged oppositely to the fixed sheave; a driven pulley that is arranged to a driven shaft interlocked with and coupled to a drive wheel; a V-belt that is wound around the driving pulley and the driven pulley; a centrifugal shift mechanism that is configured to include a plurality of centrifugal weights arranged around a rotational axis of the movable sheave and that is configured to axially move the movable sheave according to centrifugal force acting on the centrifugal weights in association with rotation of the drive shaft; a cam mechanism that axially moves the movable sheave according to the centrifugal force acting on the centrifugal weights in association with the rotation of the drive shaft, an actuator that axially drives the movable sheave; and a control unit that controls actuation of the actuator.

JP-A No. 2012-225443 discloses the well-known V-belt continuously variable transmission that is configured to achieve shift transmission in a variable manner by axially driving a movable sheave of a driving pulley by an actuator. Also, JP-A No. 2012-047292 discloses the well-known V-belt continuously variable transmission in accordance with the preamble of claim 1, configured in such a manner that the thrust provided by the actuator is reduced and the actuator is miniaturized by adding the centrifugal shift mechanism including a plurality of centrifugal weights arranged around the rotational axis of the movable sheave to the V-belt continuously variable transmission with the movable sheave driven by the actuator.

By the way, in the V-belt continuously variable transmission disclosed in the above-mentioned JP-A No. 2012-047292 in addition to the thrust acting on the movable sheave from the centrifugal shift mechanism, the thrust provided by the actuator acts on the movable sheave, and the thrust applied from the actuator to the movable sheave and a thrust acting direction in order to achieve a desired gear ratio is greatly changed according to rotational speed of the drive shaft and output from the engine. In view of this, in the control performed in the V-belt continuously variable transmission disclosed in the above-mentioned JP-A No. 2012-225443 that is, in PID control with the gear ratio fed back only, it is difficult to improve followability of target shift transmission control. For this reason, resolution of the above-mentioned problem has been expected.

The present invention has been achieved under the above-mentioned circumstances, and an object of the present invention is to improve followability of target shift transmission control, in a vehicle V-belt continuously variable transmission including also a centrifugal shift mechanism in addition to an actuator for driving a movable sheave.

In order to accomplish the above-mentioned object, according to the present invention, there is provided a vehicle V-belt continuously variable transmission including: a driving pulley that has a fixed sheave fixed to a drive shaft transmitted with power from an engine mounted on a vehicle and a movable sheave supported on the drive shaft in order to be axially relatively moved and not to be relatively rotated and arranged oppositely to the fixed sheave; a driven pulley that is arranged to a driven shaft interlocked with and coupled to a drive wheel; a V-belt that is wound around the driving pulley and the driven pulley; a centrifugal shift mechanism that is configured to include a plurality of centrifugal weights arranged around a rotational axis of the movable sheave and that is configured to axially move the movable sheave according to centrifugal force acting on the centrifugal weights in association with rotation of the drive shaft; an actuator that axially drives the movable sheave; and a control unit that controls actuation of the actuator. The control unit is provided with: actuator thrust determination means for determining thrust provided by the actuator based on the present engine speed and a target engine speed; correction value determination means for determining a correction value of the thrust provided by the actuator based on at least a throttle opening; and thrust correction means for correcting the thrust provided by the actuator and determined by the actuator thrust determination means based on the correction value determined by the correction value determination means.

Also, according to claim 2, the correction value determination means determines the correction value based on the throttle opening, and the target engine speed or rotational speed of the driven shaft.

According to claim 3, the correction value determination means has a map with the correction value determined based on the throttle opening, and the target engine speed or the rotational speed of the driven shaft, and determines the correction value by the map.

Further, according to claim 4, gear ratio mode switching means for switching a plurality of gear ratio modes having mutually different shift patterns is connected to the control unit, and the correction value determination means determines the correction value according to the gear ratio modes.

With the present invention, the actuator thrust determination means determines the thrust provided by the actuator based on the present engine speed and the target engine speed. The thrust correction means corrects the thrust provided by the actuator by the correction value determined by the correction value determination means based on at least the throttle opening. For this reason, the thrust after being corrected in consideration of the throttle opening by manipulation of a user acts on the movable sheave from the actuator, and followability of target shift transmission control can be improved.

With the additional features of claim 2, the correction value can be finely determined by taking into consideration the target engine speed or the rotational speed of the driven shaft in addition to the throttle opening. For this reason, the followability of the target shift transmission control can be further improved.

With the additional features of claim 3, the correction value can be instantaneously determined by the map with the correction value determined based on the throttle opening, and the target engine speed or the rotational speed of the driven shaft. For this reason, the followability of the target shift transmission control can be further improved.

With the additional features of claim 4, the correction value is determined according to the plurality of gear ratio modes having mutually different shift patterns. For this reason, the correction value can be finely determined individually corresponding to the gear ratio modes, and the followability of the target shift transmission control can be further improved.

Further features and advantages of the invention will become apparent from the following description with reference to the annexed drawings wherein:
Fig. is a left side view of a motorcycle,
Fig. 2 is an enlarged cross-sectional view taken along line 2-2 in Fig. 1,
Fig. 3 is a block diagram showing a control system for an actuator,
Fig. 4 is a graphic showing one example of a shift transmission characteristic obtained by only a centrifugal shift mechanism and a target shift transmission characteristic,
Fig. 5 is a graphic showing shift transmission characteristics when shifting gears to a target engine speed by manipulation to open a throttle at high vehicle speed,
Fig. 6 is a graphic showing shift transmission characteristics when shifting gears to the target engine speed by the manipulation to open the throttle at low vehicle speed,
Fig. 7 is a graphic showing the other example of a shift transmission characteristic obtained by only a centrifugal shift mechanism and a target shift transmission characteristic,
Fig. 8 is a graphic showing a secular change in engine speed and an integral term due to manipulation to close a throttle from a fully open condition to a fully closed condition,
Fig. 9 is a graphic showing the secular change in the engine speed and the integral term due to the manipulation to open the throttle from the fully closed condition to the fully open condition,
Fig. 10 is an illustration showing a map of a correction value in a sport mode, and
Fig. 11 is an illustration showing the map of the correction value in a drive mode.

Hereinafter, an embodiment of the present invention will be described with reference to accompanying drawings. Note that in the following explanation, directions such as front and rear, right and left, and upper and lower are directions when viewed from an occupant riding a motorcycle.

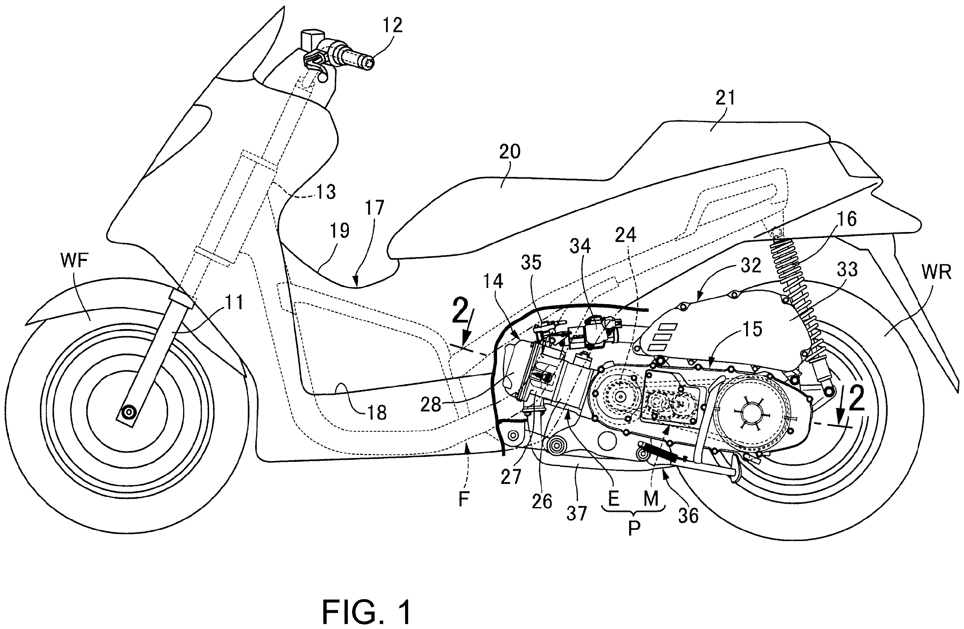

First, in Fig. 1, a vehicle body frame F of a scooter type motorcycle has a front end provided with a head pipe 13 steerably supporting a front fork 11 for pivotally supporting a front wheel WF and a steering handlebar 12 coupled to the front fork 11. A power unit P providing power for driving a rear wheel WR as a drive wheel is vertically swingably supported by an intermediate part of the vehicle body frame F in a longitudinal direction.

The power unit P is composed of an engine E arranged in front of the rear wheel WR, and a transmission M for transmitting output from the engine E to the rear wheel WR. The transmission M is stored in a transmission case 15 provided adjacently to an engine body 14 of the engine E and extending leftward of the rear wheel WR. A rear cushion unit 16 is provided between a rear part of the transmission case 15 and a rear part of the vehicle body frame F.

The vehicle body frame F and a part of the power unit P are covered with a vehicle body cover 17 having a pair of right and left footrests 18 for placing feet of an occupant and a floor tunnel part 19 raised upward between both the footrests 18. The vehicle body cover 17 is attached to the vehicle body frame F. Also, an occupant seat 20 arranged behind the floor tunnel part 19 and a pillion passenger seat 21 arranged behind the occupant seat 20 are disposed on the vehicle body cover 17.

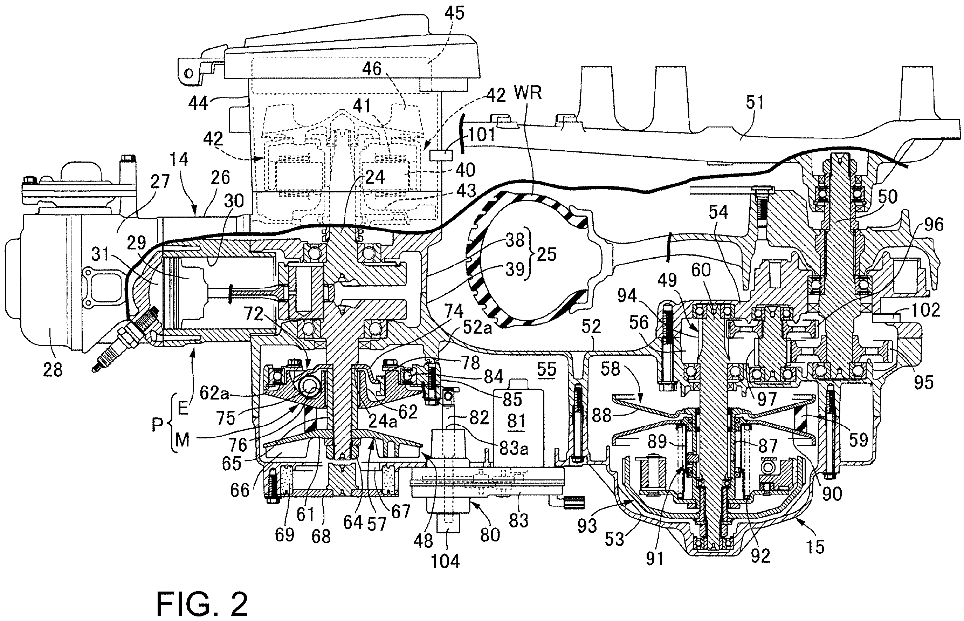

With reference to Fig. 2 together, the engine body 14 of the engine E is provided with a crankcase 25 that rotatably supports a crankshaft 24 having an axis extending in a vehicle width direction, a cylinder block 26 that has a cylinder bore 30 slidably fitting a piston 29 therein and that is joined to the crankcase 25, a cylinder head 27 that is joined to the cylinder block 26, and a head cover 28 that is joined to the cylinder head 27. A cylinder axis of the engine body 14, that is, an axis of the cylinder bore 30 is slightly inclined forwardly upward, and the piston 29 is linked to the crankshaft 24. Also, a combustion chamber 31 with a top part of the piston 29 facing is formed between the cylinder block 26 and the cylinder head 27.

Paying attention to Fig. 1, an intake device 32 for supplying air to the combustion chamber 31 is provided with an air cleaner 33 that is located on a left side of the rear wheel WR, disposed above the transmission case 15, and supported by the transmission case 15, and a throttle body 34 that is disposed between the air cleaner 33 and the cylinder head 27. A fuel injection valve 35 is attached to an upper wall of the cylinder head 27.

An exhaust system 36 for discharging exhaust gas from the combustion chamber 31 is connected to a lower wall of the cylinder head 27. The exhaust system 36 is provided with an exhaust pipe 37 that extends rearward below the engine body 14 from the lower wall of the cylinder head 27, and an exhaust muffler (not shown) that is arranged rightward of the rear wheel WR so as to be connected to a downstream end of the exhaust pipe 37.

The crankcase 25 is formed in such a manner that a first case half body 38 on a right side and a second case half body 39 on a left side are joined together. An outer rotor 40 is fixed to a right end of the crankshaft 24 rotatably penetrating through the first case half body 38, and an inner stator 41 surrounded by the outer rotor 40 so as to compose a generator 42 together with the outer rotor 40 is fixed to a support plate 43 fastened to the first case half body 38.

A cylindrical generator cover 44 for surrounding the generator 42 is joined to the first case half body 38, and a radiator 45 is disposed on a right side of the generator cover 44. A cooling fan 46 configured to allow cooling air to flow to the radiator 45 is fixed to the crankshaft 24 so as to be arranged between the generator 42 and the radiator 45.

The transmission M that transmits rotative power of the crankshaft 24 to a side of the rear wheel WR and that is stored in the transmission case 15 is provided with a V-belt continuously variable transmission 48 that shifts in a variable manner the rotative power transmitted from the crankshaft 24 as a drive shaft, and a speed reduction gear mechanism 49 that decelerates rotative power of the V-belt continuously variable transmission 48 and that transmits the decelerated rotative power to an axle 50 of the rear wheel WR. The rear wheel WR is arranged to be sandwiched between the transmission case 15 and a support arm 51 that is provided adjacently to the first case half body 38 of the crankcase 25 and that extends to the right side of the rear wheel WR. Both ends of the axle 50 are pivotally supported by the transmission case 15 and a rear end of the support arm 51 respectively.

The transmission case 15 is composed of a case main body 52 that integrally has the second case half body 39 and that extends rearward from a left wall of the crankcase 25 to a lateral side of the rear wheel WR, a case cover 53 that has a transmission chamber 55 storing the V-belt continuously variable transmission 48 and formed between the case cover 53 and the case main body 52 and that is fastened to the case main body 52, and a gear cover 54 that has a gear chamber 56 storing the speed reduction gear mechanism 49 and formed between the gear cover 54 and the case main body 52 and that is fastened to a rear part of the case main body 52.

The V-belt continuously variable transmission 48 is provided with a driving pulley 57 that is provided to the crankshaft 24 as the drive shaft with a belt winding diameter made variable, a driven pulley 58 that is provided to a driven shaft 60 arranged behind the crankshaft 24 and stored in the transmission case 15, and an endless V-belt 59 that is wound around the driving pulley 57 and the driven pulley 58.

The driving pulley 57 is composed of a fixed sheave 61 that is fixed to the crankshaft 24, and a movable sheave 62 that can approach and/or can be separated from the fixed sheave 61 in a direction along the axis of the crankshaft 24 and that is supported on the crankshaft 24. The movable sheave 62 is arranged closer to a side of the crankcase 25 than the fixed sheave 61.

An annular stepped part 24a that faces a side of the fixed sheave 61 is formed on an outer periphery of an intermediate part of the crankshaft 24 in an axial direction in the transmission chamber 55. A cylindrical sleeve 65 for surrounding the crankshaft 24 is interposed between the fixed sheave 61 and a weight retaining plate 74 for allowing an inner peripheral part to abut on the annular stepped part 24a. When a nut 64 screwed around the end of the crankshaft 24 on a side of the case cover 53 is fastened, the fixed sheave 61 and the weight retaining plate 74 are fixed to the crankshaft 24.

A fan 66 for allowing cooling air to flow into the transmission chamber 55 is provided integrally with the fixed sheave 61, and an opening 67 is formed in the case cover 53 correspondingly to the fan 66. On the other hand, a cleaner element 69 arranged to surround the opening 67 is sandwiched between the case cover 53 and a cover member 68 fastened to the case cover 53, and air outside of the transmission case 15 is passed through the cleaner element 69 and is sucked as the cooling air into the transmission chamber 55 from the opening 67.

The movable sheave 62 can be axially moved, is supported on the crankshaft 24 through the sleeve 65, and integrally has a bowl-shaped flange part 62a retaining the V-belt 59 between the movable sheave 62 and the fixed sheave 61.

The movable sheave 62 is driven to a side located closer to the fixed sheave 61 according to an increase in rotational speed of the crankshaft 24 by operation of the centrifugal shift mechanism 72 configured to include a plurality of centrifugal weights 75 arranged around a rotational axis of the movable sheave 62. The centrifugal shift mechanism 72 is provided with a cam surface 76 that is formed on a side of the flange part 62a of the movable sheave 62 opposite to the fixed sheave 61, the weight retaining plate 74 that is fixed to the crankshaft 24 and that is opposed to the cam surface 76 from a side opposite to the movable sheave 62, and the plurality of centrifugal weights 75 that are retained between the cam surface 76 and the weight retaining plate 74.

A plurality of portions in a peripheral direction of the inner periphery of the flange part 62a of the movable sheave 62 opposite to the fixed sheave 61 are held by a plurality of holding members 78 fitted to portions in the peripheral direction of an outer periphery of the weight retaining plate 74. The weight retaining plate 74 and the movable sheave 62 are rotated together with the crankshaft 24.

In the centrifugal shift mechanism 72 configured in this manner, the centrifugal weights 75 brought into rolling contact with the cam surface 76 are moved outward in a radial direction of the crankshaft 24 by an increase in centrifugal force acting in association with rotation of the crankshaft 24, so that the movable sheave 62 is moved to a side of the fixed sheave 61.

In addition to thrust provided by the centrifugal shift mechanism 72, the movable sheave 62 is driven in the axial direction of the crankshaft 24 also by thrust provided by an actuator 80. The actuator 80 has an electric motor 81, and an output rod 82 that is axially moved by power from the electric motor 81. A case 83 for the actuator is attached to an outer surface of the case cover 53 of the transmission case 15 so that the output rod 82 is moved in a direction in parallel with the axis of the crankshaft 24.

A coupling arm 85 is supported by the movable sheave 62 through a ball bearing 84. The output rod 82 is engaged with and coupled to the coupling arm 85. Movement of the output rod 82 in the axial direction is transmitted to the movable sheave 62.

With regard to the output rod 82, the moving end in a direction for driving the movable sheave 62 to a side with the winding diameter of the V-belt 59 around the driving pulley 57 reduced, that is, a side with a gear ratio of the V-belt continuously variable transmission 48 set to a low ratio, is regulated in such a manner that the coupling arm 85 abuts on a regulation projecting part 52a provided to the case main body 52 of the transmission case 15. Aldo, with regard to the output rod 82, the moving end in the direction for driving the movable sheave 62 to a side with the winding diameter of the V-belt 59 around the driving pulley 57 increased, that is, a side with the gear ratio of the V-belt continuously variable transmission 48 set to a top ratio, is regulated in such a manner that the coupling arm 85 abuts on a regulation stepped part 83a formed with respect to the case 83. Note that movement of the output rod 82 to regulation ends in both directions is performed in order to confirm an initial position when starting the engine E. In a normal shift transmission range, the output rod 82 is not moved to the regulation ends in both the directions.

The driven pulley 58 is composed of a fixed sheave 88 that is fixed to a cylindrical inner cylinder 87 relatively rotatably supported by the driven shaft 60 while coaxially surrounding the driven shaft 60, and a movable sheave 90 that can be provided closer to and can be separated from the fixed sheave 88 in such a manner that the movable sheave 90 can be axially relatively moved and relatively rotated with respect to the inner cylinder 87 and is fixed to an outer cylinder 89 for axially surrounding the inner cylinder 87. The V-belt 59 is wound between the fixed sheave 88 and the movable sheave 90. Also, a torque cam mechanism 91 for allowing component force in the axial direction to act between both the sheaves 88, 90 according to a phase difference in relative rotation between the fixed sheave 88 and the movable sheave 90 is provided between the inner cylinder 87 and the outer cylinder 89. The movable sheave 90 is elastically urged toward the side of the fixed sheave 88 by a coil spring 92. A centrifugal clutch 93 brought into a state of transmitting the power as engine speed exceeds set rotational speed is provided between the fixed sheave 88 and the driven shaft 60.

An interval in the axial direction between the fixed sheave 88 and the movable sheave 90 of the driven pulley 58 is determined by a balance among axial force generated by the torque cam mechanism 91, axial elastic force generated by the coil spring 92, and force from the V-belt 59 acting on a direction for keeping an interval between the fixed sheave 88 and the movable sheave 90. If the winding diameter of the V-belt 59 around the driving pulley 57 is increased, the winding diameter of the V-belt 59 around the driven pulley 58 is reduced.

On end of the driven shaft 60 liquid-tightly and rotatably penetrating through the case main body 52 is rotatably supported by the case cover 53, and the other end of the driven shaft 60 is rotatably supported by the gear cover 54. One end of the axle 50 of the rear wheel WR airtightly penetrates through the gear cover 54, and is entered into the gear chamber 56. The one end of the axle 50 is rotatably supported by the case main body 52 and the gear cover 54, and the other end of the axle 50 is rotatably supported by the support arm 51.

The speed reduction gear mechanism 49 is provided between the driven shaft 60 and the axle 50, and is stored in the gear chamber 56. The speed reduction gear mechanism 49 has a drive gear 94 that is provided integrally with the driven shaft 60 transmitted with the rotative power from the crankshaft 24 through the V-belt continuously variable transmission 48 and the centrifugal clutch 93, a final gear 95 provided to the axle 50 of the rear wheel WR, and a first idle gear 96 and a second idle gear 97 that are arranged between the drive gear 94 and the final gear 95.

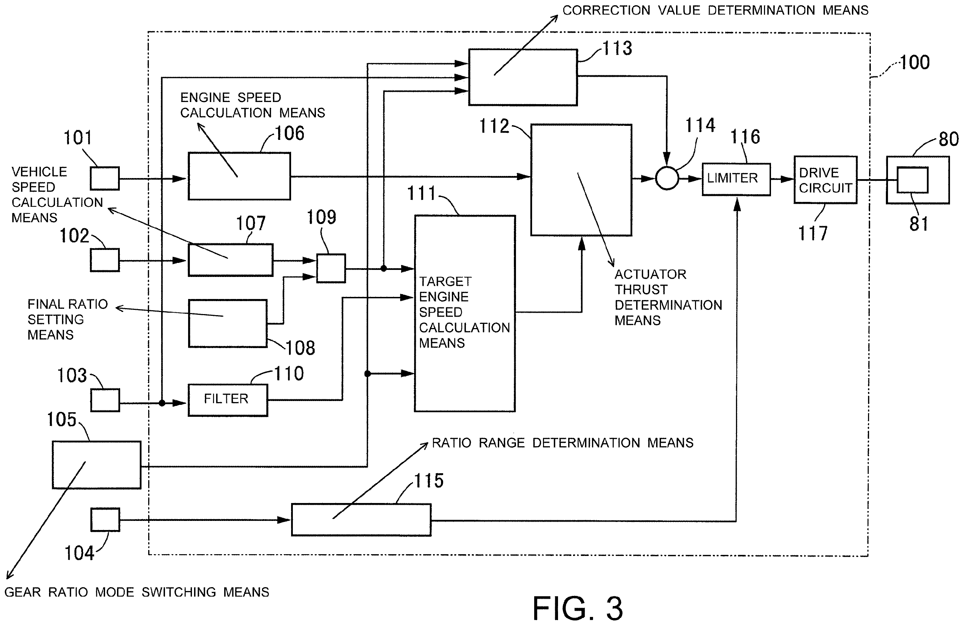

In Fig. 3, actuation of the electric motor 81 in the actuator 80 is controlled by a control unit 100. Into the control unit 100, the following detection values are input, that is, a detection value detected by a first rotational speed detector 101 attached to the generator cover 44 so as to be opposed to the outer periphery of the outer rotor 40 in the generator 42 in order to detect the rotational speed of the crankshaft 24, a detection value detected by a second rotational speed detector 102 attached to the gear cover 54 in the transmission case 15 in order to detect the rotational speed of the axle 50, a detection value detected by a throttle opening detector 103 for detecting a throttle opening of the engine E, and a detection value detected by an actuator action state detector 104 attached to the case 83 for the actuator 80 in order to detect an action state of the actuator 80. The control unit 100 is connected with gear ratio mode switching means 105.

The gear ratio mode switching means 105 is configured to switch by the occupant a plurality of gear ratio modes having mutually different shift patterns. In the embodiment, two kinds of gear ratio modes, that is, a sport mode and a drive mode can be switched.

The control unit 100 is provided with engine speed calculation means 106, vehicle speed calculation means 107, final ratio setting means 108 with a reduction gear ratio in the speed reduction gear mechanism 49 determined, driven shaft rotational speed calculation means 109, a filter 110, target engine speed calculation means 111, actuator thrust determination means 112, correction value determination means 113 for determining the correction value of the thrust provided by the actuator, thrust correction means 114, ratio range determination means 115, a limiter 116 for determining a thrust threshold value, and a drive circuit 117 for driving the electric motor 81 in the actuator 80 in order to provide the thrust provided by the actuator after passing through the limiter 116.

The engine speed calculation means 106 calculates the present engine speed based on the detection value detected by the first rotational speed detector 101. Also, the vehicle speed calculation means 107 calculates the vehicle speed based on the detection value detected by the second rotational speed detector 102. The driven shaft rotational speed calculation means 109 calculates the rotational speed of the driven shaft 60 by the vehicle speed and the reduction gear ratio in the speed reduction gear mechanism 49 determined by the final ratio setting means 108.

The detection value detected by the throttle opening detector 103 is input into the filter 110. The target engine speed calculation means 111 calculates the target engine speed based on the rotational speed of the driven shaft 60 calculated by the driven shaft rotational speed calculation means 109, the throttle opening after passing through the filter 110, and the gear ratio mode input from the gear ratio mode switching means 105.

The actuator thrust determination means 112 determines the thrust provided by the actuator 80 based on the present engine speed and the target engine speed, for example, by PID calculation. The present engine speed calculated by the engine speed calculation means 106 and the target engine speed calculated by the target engine speed calculation means 111 are input into the actuator thrust determination means 112.

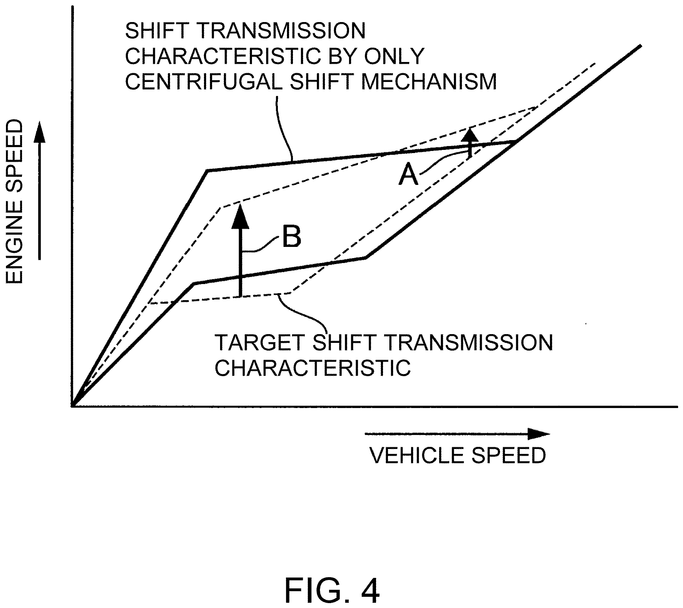

By the way, since the V-belt continuously variable transmission 48 can perform the shift transmission by only the centrifugal shift mechanism 72 without applying the thrust provided by the actuator 80, a thrust ratio and a thrust applying direction of the actuator 80 and the centrifugal shift mechanism 72 when statically achieving the balance with respect to a certain target engine speed are changed. On the other hand, when the control over the actuator 80 by the control unit 100 is performed so that the thrust determined by the actuator thrust determination means 112 is provided by the PID calculation based on the present engine speed and the target engine speed, the PID calculation is performed such that the thrust is determined with respect to a difference between the present engine speed and the target engine speed. As a result, the final thrust ratio and the final thrust applying direction cannot be determined, and characteristics to target following differ depending on the target engine speed. For this reason, when one example showing a relationship between the shift transmission characteristic obtained by only the centrifugal shift mechanism 72 and the target shift transmission characteristic is, for example, a graphic shown in Fig. 4, the following problem will be raised if trying to achieve compatibility in the same setting between a period during the shift transmission associated with the manipulation to open the throttle at high speed as shown by an arrow A and a period during the shift transmission associated with the manipulation to open the throttle at low speed as shown by an arrow B.

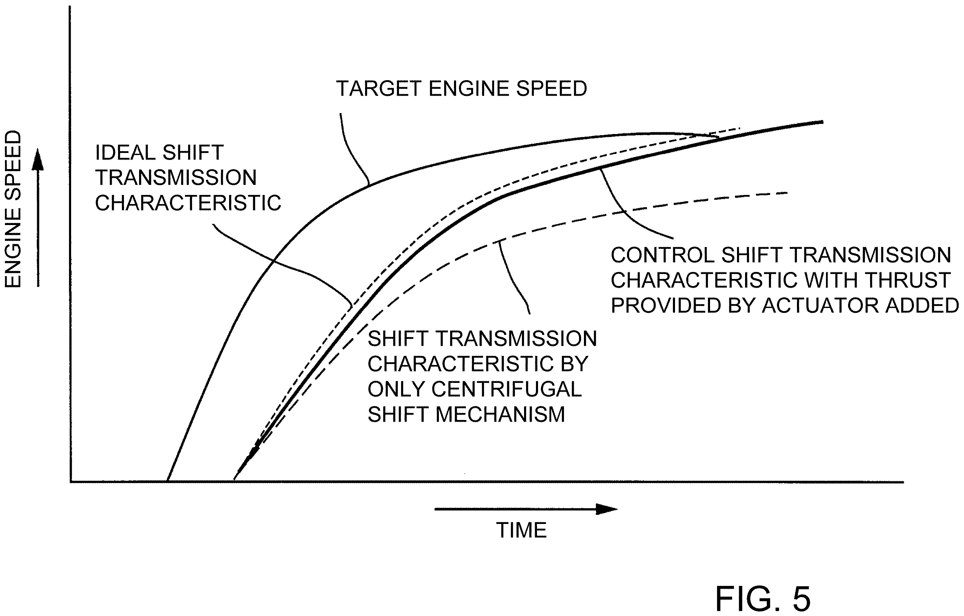

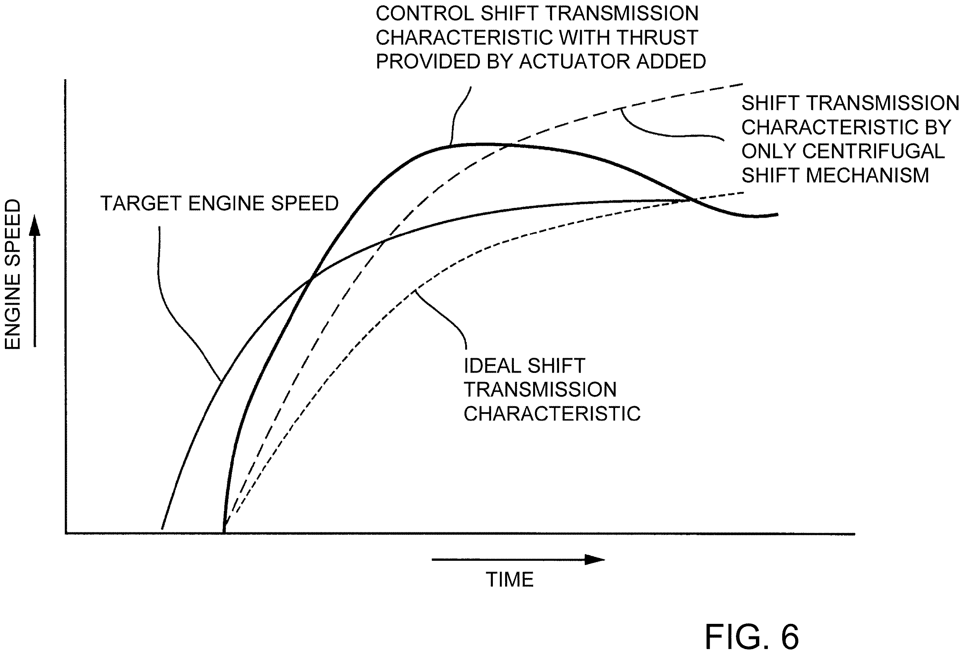

That is, during the shift transmission associated with the manipulation to open the throttle at high speed, as shown in Fig. 5, the thrust provided by only the centrifugal shift mechanism 72 becomes insufficient with respect to the target engine speed. Therefore, the direction of the thrust applied to the movable sheave 62 of the driving pulley 57 by the actuator 80 is stabilized in one direction, and control shift transmission characteristics by the thrust provided by the centrifugal shift mechanism 72 and the actuator 80 are set along an ideal shift transmission characteristic while overshoot from the target engine speed is reduced. As a result, the problem is not raised. Also, the problem is not raised since it is substantially the same in the throttle closing direction. On the other hand, during the shift transmission associated with the manipulation to open the throttle at low speed, a problem will be raised as shown in Fig. 6. That is, since the shift transmission characteristic by the thrust provided by only the centrifugal shift mechanism 72 is set at the low ratio with respect to the target engine speed, the thrust provided by the actuator 80 and determined by only the PID calculation is directed to an excessive low ratio direction, and the mechanical thrust provided by the centrifugal shift mechanism 72 in a low ratio direction exceeds even if the thrust provided by the actuator 80 is switched to a top direction before the actual control shift transmission characteristic reaches the target shift transmission characteristic. Thereby, the overshoot is caused. For this reason, when performing control according to the period during the shift transmission associated with the manipulation to open the throttle at high vehicle speed, totally very slow setting is created, and alignment with the other regions cannot be achieved.

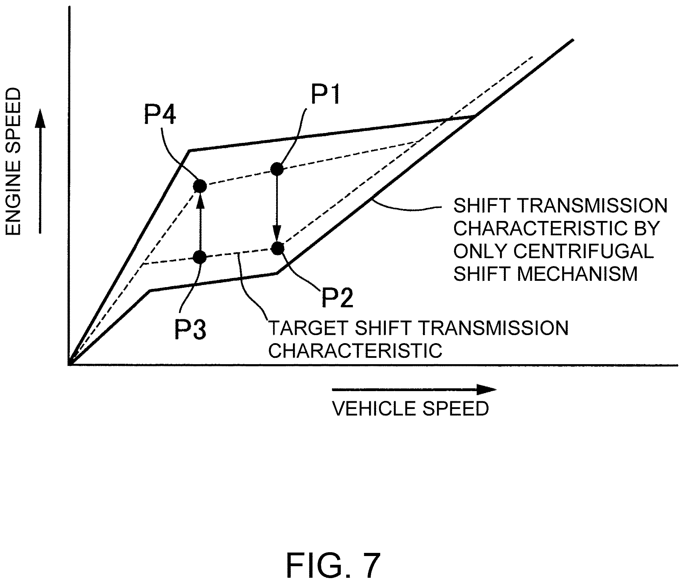

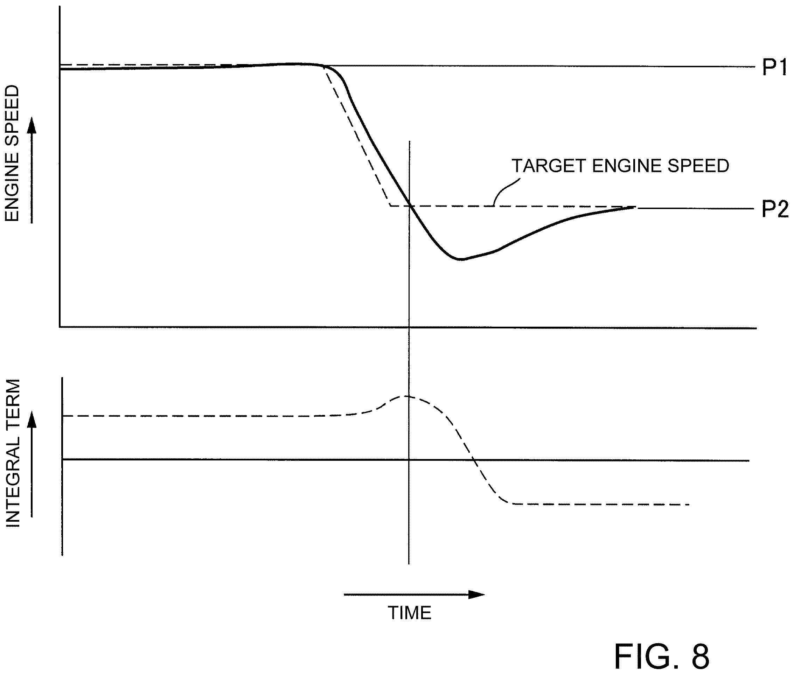

Also, in order to eliminate a steady-state deviation when the thrust provided by the actuator 80 is determined by only the PID calculation, the integral term has only to be increased. However, when required thrust is reversed by manipulation of the throttle or the like, the overshoot is caused by the increased integral term. That is, when the other example different from the one example shown in Fig. 4 of the shift transmission characteristic obtained by only the centrifugal shift mechanism 72 and the target shift transmission characteristic is, for example, the graphic shown in Fig. 7, the engine speed and the integral term are changed as shown in Fig. 8 when the throttle is manipulated from a fully open side to a fully closed side from a point P1 toward a point P2. That is, in order to follow the target value at the point P1, the actuator 80 is required to provide the thrust on the side of the top ratio. On the other hand, the thrust on the side of the low ratio is required at the point P2, the integral term at the point P1 acts on an opposite direction, and the overshoot to the side with the engine speed reduced is caused.

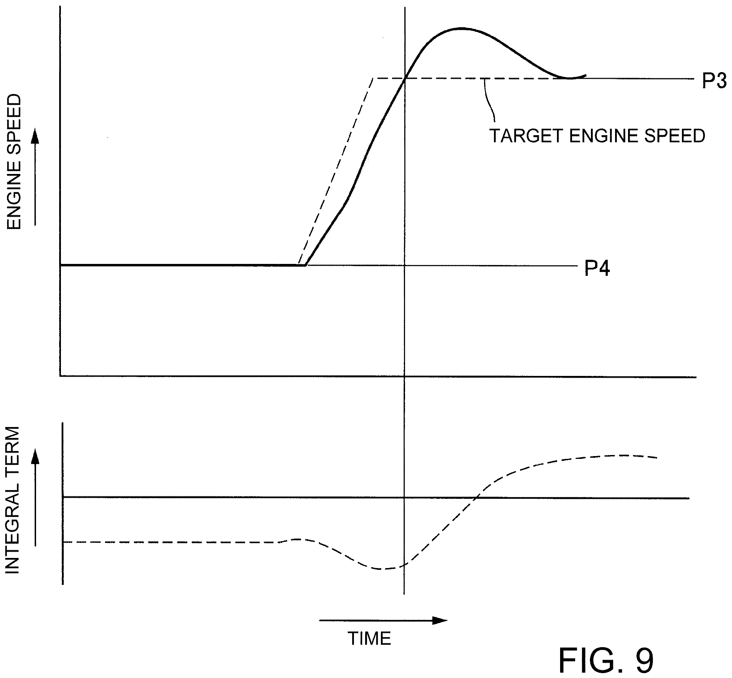

Also, when the throttle is manipulated from the fully closed side to the fully open side from a point P3 toward a point P4, as shown in Fig. 9, the engine speed and the integral term are changed. That is, in order to follow the target value at the point P3, the actuator 80 is required to provide the thrust on the side of the low ratio. On the other hand, the thrust on the side of the top ratio is required at the point P4, the integral term at the point P3 acts on the opposite direction at the point P4, and the overshoot to the side with the engine speed increased is caused.

Also, there is a possibility that the thrust is required or not required depending on the rotation on the driven side, that is, the driven shaft 60, of the V-belt continuously variable transmission 48 when developing the sift transmission characteristic map, an appearance mode of the overshoot is not constant, and it is incapable of covering by only the setting by the PID calculation. Further, if trying to restrict the integral term to keep the overshoot within an allowable range, the thrust provided by the actuator 80 becomes insufficient, and a region with the steady-state deviation remaining is caused.

In this way, when the actuator 80 is controlled to provide the thrust obtained by the PID calculation based on the present engine speed and the target engine speed, the above-mentioned problems explained with reference to Figs. 4 to 9 are caused. However, according to the present invention, the above-mentioned problems can be addressed in such a manner that the thrust provided by the actuator 80 and determined by the PID calculation in the actuator thrust determination means 112 is corrected by the correction value determined by the correction value determination means 113. The correction value determination means 113 calculates a feedforward term as the correction value to be corrected based on at least the throttle opening. In the embodiment, the correction value determination means 113 determines the correction value with respect to each of the gear ratio modes based on the throttle opening detected as it is by the throttle opening detector 103 without passing through the filter 110 in order to immediately reflect the thrust reverse by the manipulation of the throttle in the correction value, and the rotational speed of the driven shaft 60 calculated by the driven shaft rotational speed calculation means 109. The throttle opening detected as it is by the throttle opening detector 103, the rotational speed of the driven shaft 60 calculated by the driven shaft rotational speed calculation means 109, and the gear ratio mode input from the gear ratio mode switching means 105 are input into the correction value determination means 113.

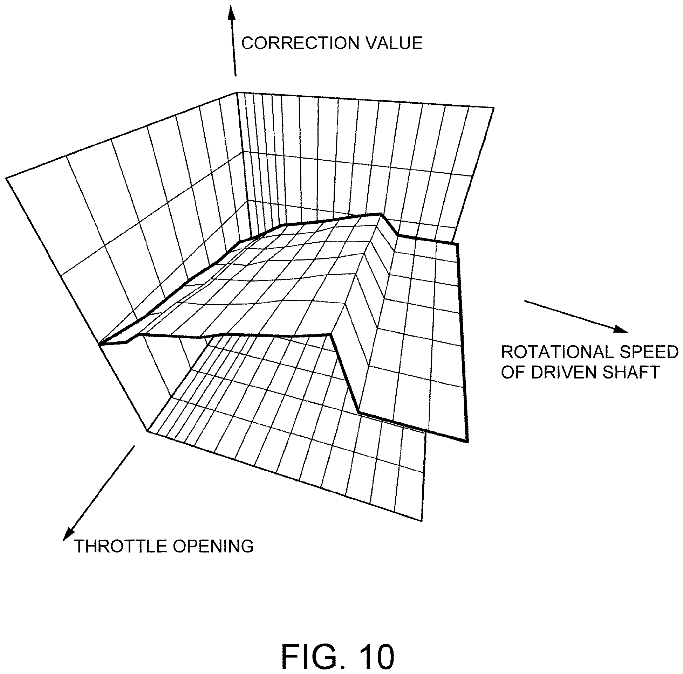

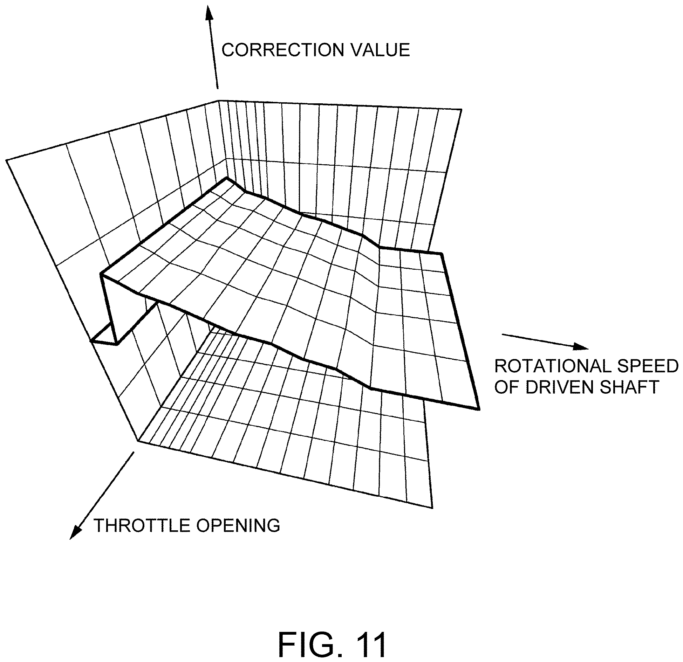

In addition, the correction value determination means 113 has the map with the correction value determined based on the throttle opening and the rotational speed of the driven shaft 60, and determines the correction value by the map. For example, the map in the sport mode shown in Fig. 10 and the map in the drive mode shown in Fig. 11 are previously prepared.

The thrust correction means 114 corrects the thrust provided by the actuator 80 and determined by the actuator thrust determination means 112 by the correction value determined by the correction value determination means 113, and the thrust after being corrected by the thrust correction means 114 is input into the limiter 116. On the other hand, the detection value detected by the actuator action state detector 104 is input into the ratio range determination means 115, and the ratio range determined by the ratio range determination means 115 based on the detection value is input into the limiter 116. The threshold value determined according to the ratio range is input from the limiter 116 into the drive circuit 117 so that the threshold value does not exceed the thrust after being corrected by the thrust correction means 114.

Next, action of the embodiment will be described. The V-belt continuously variable transmission 48 includes the centrifugal shift mechanism 72 that is configured to include the plurality of centrifugal weights 75 arranged around the rotational axis of the movable sheave 62 of the driving pulley 57, the actuator 80 that axially drives the movable sheave 62, and the control unit 100 that controls the actuation of the actuator 80. The control unit 100 is provided with: the actuator thrust determination means 112 for determining the thrust provided by the actuator 80 based on the present engine speed and the target engine speed; the correction value determination means 113 for determining the correction value of the thrust provided by the actuator based on at least the throttle opening; and the thrust correction means 114 for correcting the thrust provided by the actuator and determined by the actuator thrust determination means 112 based on the correction value determined by the correction value determination means 113. For this reason, the thrust after being corrected in consideration of the throttle opening by the manipulation of the user acts on the movable sheave 62 from the actuator 80, and the followability of the target shift transmission control can be improved.

In addition, the correction value determination means 113 determines the correction value based on the throttle opening, and the target engine speed or the rotational speed of the driven shaft 60 (the rotational speed of the driven shaft 60 in the embodiment). For this reason, the correction value can be finely determined by taking into consideration the target engine speed or the rotational speed of the driven shaft in addition to the throttle opening, and the followability of the target shift transmission control can be further improved.

Also, the correction value determination means 113 has the map with the correction value determined based on the throttle opening, and the target engine speed or the rotational speed of the driven shaft 60, and determines the correction value by the map. For this reason, the correction value can be instantaneously determined, and the followability of the target shift transmission control can be further improved.

Further, the gear ratio mode switching means 105 for switching the plurality of gear ratio modes having mutually different shift patterns is connected to the control unit 100. The correction value determination means 113 determines the correction value according to the gear ratio modes. For this reason, the correction value can be finely determined individually corresponding to the gear ratio modes, and the followability of the target shift transmission control can be further improved.

Although the embodiment of the present invention has been described as above, the present invention is not limited to the above-mentioned embodiment, and various design changes can be made thereto without departing from the subject matter of the invention in claims.

### Main Reference Signs

- 24 ...: Crankshaft as drive shaft
- 57 ...: Driving pulley
- 58 ...: Driven pulley
- 59 ...: V-belt
- 60 ...: Driven shaft
- 61 ...: Fixed sheave
- 62 ...: Movable sheave
- 72 ...: Centrifugal shift mechanism
- 75 ...: Centrifugal weight
- 80 ...: Actuator
- 100...: Control unit
- 112...: Actuator thrust determination means
- 113...: Correction value determination means
- 114...: Thrust correction means
- E ...: Engine
- WE...: Rear wheel as drive wheel

## Claims

1. A vehicle V-belt continuously variable transmission comprising:
a driving pulley (57) that has a fixed sheave (61) fixed to a drive shaft (24) transmitted with power from an engine (E) mounted on a vehicle, and a movable sheave (62) supported on the drive shaft (24) in order to be axially relatively moved and not to be relatively rotated and arranged oppositely to the fixed sheave (61);
a driven pulley (58) that is arranged to a driven shaft (60) interlocked with and coupled to a drive wheel (WR);
a V-belt (59) that is wound around the driving pulley (57) and the driven pulley (58);
a centrifugal shift mechanism (72) that is configured to include a plurality of centrifugal weights (75) arranged around a rotational axis of the movable sheave (62) and that is configured to axially move the movable sheave (62) according to centrifugal force acting on the centrifugal weights (75) in association with rotation of the drive shaft (24);
an actuator (80) that axially drives the movable sheave (62); and
a control unit (100) that controls actuation of the actuator (80), **characterized in that** the control unit (100) is provided with:
actuator thrust determination means (112) for determining thrust provided by the actuator (80) based on the present engine speed and a target engine speed;
correction value determination means (113) for determining a correction value of the thrust provided by the actuator based on at least a throttle opening; and
thrust correction means (114) for correcting the thrust provided by the actuator and determined by the actuator thrust determination means (112) based on the correction value determined by the correction value determination means (113).

2. The vehicle V-belt continuously variable transmission according to claim 1, wherein the correction value determination means (113) determines the correction value based on the throttle opening, and the target engine speed or rotational speed of the driven shaft (60).

3. The vehicle V-belt continuously variable transmission according to claim 2, wherein the correction value determination means (113) has a map with the correction value determined based on the throttle opening, and the target engine speed or the rotational speed of the driven shaft (60), and determines the correction value by the map.

4. The vehicle V-belt continuously variable transmission according to any one of claims 1 to 3, wherein gear ratio mode switching means (105) for switching a plurality of gear ratio modes having mutually different shift patterns is connected to the control unit (100), and the correction value determination means (113) determines the correction value according to the gear ratio modes.

## Patentansprüche

1. Ein stufenloses Keilriemenfahrzeuggetriebe, das folgende Merkmale aufweist:
eine Antriebsrolle (57), bei der eine feste Riemenscheibe (61) an einer Antriebswelle (24) befestigt ist, auf die von einem an einem Fahrzeug angebrachten Motor (E) Leistung übertragen wird, und bei der eine bewegbare Riemenscheibe (62) auf der Antriebswelle (24) gehalten wird, um axial relativ bewegt zu werden und nicht relativ gedreht zu werden, und gegenüber von der festen Riemenscheibe (61) angeordnet ist;
eine Abtriebsrolle (58), die an einer Abtriebswelle (60) angeordnet ist, die mit einem Antriebsrad (WR) ineinandergreift und gekoppelt ist;
einen Keilriemen (59), der um die Antriebsrolle (57) und die Abtriebsrolle (58) gewickelt ist;
einen Zentrifugalverschiebungsmechanismus (72), der dazu ausgebildet ist, eine Mehrzahl von Zentrifugalgewichten (75) zu umfassen, die um eine Drehachse der bewegbaren Riemenscheibe (62) angeordnet sind, und der dazu ausgebildet ist, die bewegbare Riemenscheibe (62) gemäß einer Zentrifugalkraft axial zu bewegen, die im Zusammenhang mit einer Drehung der Antriebswelle (24) auf die Zentrifugalgewichte (75) wirkt;
ein Betätigungselement (80), das die bewegbare Riemenscheibe (62) axial antreibt; und
eine Steuereinheit (100), die eine Betätigung des Betätigungselementes (80) steuert,
**dadurch gekennzeichnet, dass** die Steuereinheit (100) mit folgenden Merkmalen versehen ist:
einer Betätigungselementschubbestimmungseinrichtung (112) zum Bestimmen eines durch das Betätigungselement (80) bereitgestellten Schubes basierend auf der vorliegenden Motorgeschwindigkeit und einer Zielmotorgeschwindigkeit;
einer Korrekturwertbestimmungseinrichtung (113) zum Bestimmen eines Korrekturwertes des durch das Betätigungselement bereitgestellten Schubes basierend auf zumindest einer Drosselöffnung; und
einer Schubkorrektureinrichtung (114) zum Korrigieren des durch das Betätigungselement bereitgestellten und durch die Betätigungselementschubbestimmungseinrichtung (112) bestimmten Schubes basierend auf dem durch die Korrekturwertbestimmungseinrichtung (113) bestimmten Korrekturwertes.

2. Das stufenlose Keilriemenfahrzeuggetriebe gemäß Anspruch 1, bei dem die Korrekturwertbestimmungseinrichtung (113) den Korrekturwert basierend auf der Drosselöffnung sowie der Zielmotorgeschwindigkeit oder einer Drehgeschwindigkeit der Abtriebswelle (60) bestimmt.

3. Das stufenlose Keilriemenfahrzeuggetriebe gemäß Anspruch 2, bei dem die Korrekturwertbestimmungseinrichtung (113) eine Karte mit dem basierend auf der Drosselöffnung sowie der Zielmotorgeschwindigkeit oder der Drehgeschwindigkeit der Abtriebswelle (60) bestimmten Korrekturwert aufweist, und den Korrekturwert durch die Karte bestimmt.

4. Das stufenlose Keilriemenfahrzeuggetriebe gemäß einem der Ansprüche 1 bis 3, bei dem eine Übersetzungsverhältnismodusschalteinrichtung (105) zum Schalten einer Mehrzahl von Übersetzungsverhältnismodi, die zueinander unterschiedliche Verschiebungsmuster aufweisen, mit der Steuereinheit (100) verbunden ist, und die Korrekturwertbestimmungseinrichtung (113) den Korrekturwert gemäß den Übersetzungsverhältnismodi bestimmt.

## Revendications

1. Transmission variable en continu à courroie trapézoïdale de véhicule comprenant :
une poulie d'entraînement (57) qui possède un réa fixe (61) fixé à un arbre d'entraînement (24) dont la transmission est assurée par la puissance d'un moteur (E) monté sur un véhicule, et un réa mobile (62) supporté sur l'arbre d'entraînement (24) afin d'être déplacé de manière axiale relative et de ne pas être tourné de manière relative et agencé à l'opposé du réa fixe (61) ;
une poulie entraînée (58) qui est agencée sur un arbre entraîné (60) interverrouillé et couplé avec une roue d'entraînement (WR) ;
une courroie trapézoïdale (59) qui est enroulée autour de la poulie d'entraînement (57) et de la poulie entraînée (58) ;
un mécanisme de décalage centrifuge (72) qui est configuré pour comporter une pluralité de poids centrifuges (75) agencés autour d'un axe de rotation du réa mobile (62) et qui est configuré pour déplacer axialement le réa mobile (62) selon la force centrifuge agissant sur les poids centrifuges (75) en association avec la rotation de l'arbre d'entraînement (24) ;
un actionneur (80) qui entraîne axialement le réa mobile (62) ; et
une unité de commande (100) qui commande l'actionnement de l'actionneur (80),
**caractérisée en ce que** l'unité de commande (100) est pourvue de :
moyens de détermination de poussée d'actionneur (112) pour déterminer la poussée fournie par l'actionneur (80) en se basant sur la vitesse de moteur courante et une vitesse de moteur cible ; de
moyens de détermination de valeur de correction (113) pour déterminer une valeur de correction de la poussée fournie par l'actionneur en se basant sur au moins une ouverture de papillon des gaz ; et de
moyens de correction de poussée (114) pour corriger la poussée fournie par l'actionneur et déterminée par les moyens de détermination de poussée d'actionneur (112) en se basant sur la valeur de correction déterminée par les moyens de détermination de valeur de correction (113).

2. Transmission variable en continu à courroie trapézoïdale de véhicule selon la revendication 1, dans laquelle les moyens de détermination de valeur de correction (113) déterminent la valeur de correction en se basant sur l'ouverture du papillon des gaz, et la vitesse de moteur cible ou la vitesse de rotation de l'arbre entraîné (60).

3. Transmission variable en continu à courroie trapézoïdale de véhicule selon la revendication 2, dans laquelle les moyens de détermination de valeur de correction (113) possèdent une carte avec la valeur de correction déterminée en se basant sur l'ouverture du papillon des gaz, et la vitesse de moteur cible ou la vitesse de rotation de l'arbre entraîné (60), et détermine la valeur de correction au moyen de la carte.

4. Transmission variable en continu à courroie trapézoïdale de véhicule selon l'une quelconque des revendications 1 à 3, dans laquelle des moyens de commutation de modes de rapport de transmission (105) pour commuter une pluralité de modes de rapport de transmission ayant des modèles de décalage mutuellement différents sont connectés à l'unité de commande (100), et les moyens de détermination de valeur de correction (113) déterminent la valeur de correction selon les modes de rapport de transmission.
